# EUROPEAN PATENT APPLICATION

(11) **EP 4 788 000 A1**
(43) Date of publication of application: **05.08.2026**
(21) Application number: 24884623.0
(22) Date of filing: 26.10.2024
(51) Int. Cl.: H04W 72/0446

(54) **COMMUNICATION METHOD AND APPARATUS, AND STORAGE MEDIUM**

(30) Priority: 31.10.2023 CN 202311439135
(71) Applicant: HUAWEI TECHNOLOGIES CO., LTD., Shenzhen 518129 (CN)
(72) Inventor: XIA, Jinhuan, Shenzhen, Guangdong 518129 (CN)
(74) Representative: Gill Jennings & Every LLP
(86) International application number: PCT/CN2024/127555
(87) International publication number: WO 2025/092620

(57) **Abstract**

A communication method and apparatus, and a storage medium are provided. An access network device configures and/or schedules a plurality of resources of a first signal, so that a terminal can send the first signal at positions of the plurality of resources in a first time period, and does not configure and/or not schedule the terminal to send a second signal in the first time period. A configuration behavior and/or a scheduling behavior of the access network device are/is clearly defined, so that the terminal does not need to switch between an initial BWP or an active BWP and a frequency-hopping SRS, thereby reducing power consumption of a network and the terminal.

## Description

This application claims priority to Chinese Patent Application No. 202311439135.3, filed with the China National Intellectual Property Administration on October 31, 2023 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

An access network device may configure a conventional terminal to send a wideband sounding reference signal (sounding reference signal, SRS) for positioning. Accuracy of a positioning measurement quantity is based on a bandwidth for the SRS. A larger bandwidth indicates higher measurement accuracy and a more precise the final estimated position of the terminal.

Compared with the conventional terminal, a reduced capability terminal (redcap UE) is a simplified terminal with lower complexity. According to a specified maximum channel bandwidth capability that terminal implementation needs to support, within frequency range 1 (frequency range, FR1), a maximum bandwidth for a single SRS transmission is 20 MHz. If a measurement quantity with same accuracy as those with a 100 MHz SRS needs to be obtained, the reduced capability terminal needs to send the SRS over multiple consecutive frequency hops, so that frequency-hopping transmission of a narrowband SRS is equivalent or similar to the transmission of a wideband SRS by the terminal.

For a reduced capability terminal, a specific switching time is required to switch from a bandwidth position corresponding to one hop to a bandwidth position corresponding to another hop in frequency domain for SRS transmission. A position of a first hop or a last hop is outside an initial bandwidth part (bandwidth part, BWP) or an active BWP of the terminal, and a switching time for the first hop or the last hop may be longer than a switching time between two intermediate hops. The initial BWP or the active BWP is used to send/receive other channels or signals. When a time interval between every two hops of the frequency-hopping SRS is relatively long, the terminal needs to switch between the initial BWP or the active BWP and a resource position of the frequency-hopping SRS. Consequently, power consumption of the terminal is high.

In view of this, how to reduce power consumption of a terminal for frequency-hopping SRS transmission is a problem to be resolved.

### SUMMARY

This application provides a communication method and apparatus, and a storage medium, to reduce power consumption of a terminal for sending a signal.

According to a first aspect, a communication method is provided. The method is implemented by an access network device, or a chip or a circuit used in the access network device.

The method includes: The access network device sends resource configuration and/or scheduling information of a first signal to a terminal, where the resource configuration and/or scheduling information are/is used to configure and/or schedule a plurality of resources of the first signal, time domain positions of the plurality of resources are not overlapping, and frequency domain positions of the plurality of resources are partially overlapping or entirely non-overlapping. In addition, the access network device receives the first signal from the terminal at positions of the plurality of resources in a first time period, where the terminal is not configured and/or not scheduled to send a second signal in the first time period.

According to the method, the access network device configures and/or schedules the plurality of resources of the first signal, so that the terminal can send the first signal at the positions of the plurality of resources in the first time period, and does not configure and/or not schedule the terminal to send the second signal in the first time period. A configuration behavior and/or a scheduling behavior of the access network device are/is clearly defined, so that the terminal does not need to switch between an initial BWP or an active BWP and a frequency-hopping SRS, or between a plurality of frequency-hopping SRS resources, thereby reducing power consumption of a network and the terminal. In addition, when the first signal is used for uplink positioning, the access network device may receive, based on a frequency hopping pattern, a first signal equivalent to or similar to a wideband signal, thereby improving positioning accuracy.

With reference to the first aspect, in a possible implementation, the method further includes: sending configuration information of the first time period to the terminal.

According to a second aspect, a communication method is provided. The method is implemented by a terminal, or a chip or a circuit used in the terminal.

The method includes: The terminal receives resource configuration and/or scheduling information of a first signal from an access network device, where the resource configuration and/or scheduling information are/is used to configure and/or schedule a plurality of resources of the first signal, time domain positions of the plurality of resources are not overlapping, and frequency domain positions of the plurality of resources are partially overlapping or entirely non-overlapping. In addition, the terminal sends the first signal at positions of the plurality of resources in a first time period, where the terminal does not expect the access network device to configure or schedule the terminal to send a second signal in the first time period.

According to the method, the terminal configures and/or schedules the plurality of resources of the first signal via the access network device, so that the terminal can send the first signal at the positions of the plurality of resources in the first time period, and does not configure and/or not schedule the terminal to send the second signal in the first time period. A configuration behavior and/or a scheduling behavior of the access network device are/is clearly defined, so that the terminal does not need to switch between an initial BWP or an active BWP and a frequency-hopping SRS, or between a plurality of frequency-hopping SRS resources, thereby reducing power consumption of a network and the terminal. In addition, when the first signal is used for uplink positioning, the access network device may receive, based on a frequency hopping pattern, a first signal equivalent to or similar to a wideband signal, thereby improving positioning accuracy.

With reference to the second aspect, in a possible implementation, the method further includes: The terminal receives configuration information of the first time period from the access network device.

With reference to the first aspect or the second aspect, in another possible implementation, the configuration information of the first time period includes at least one of the following: a start system frame number, a start slot, and a start symbol of the first time period, a periodicity of the first time period, or duration of the first time period.

With reference to the first aspect or the second aspect, in still another possible implementation, a start position of the first time period is a start position of an earliest first signal in the first signal, and an end position of the first time period is an end position of a latest first signal in the first signal.

With reference to the first aspect or the second aspect, in still another possible implementation, the first signal is a positioning reference signal, and the second signal is a positioning reference signal or an uplink channel.

In this implementation, the terminal does not expect the access network device to configure, activate, or schedule another uplink channel or signal to be sent in the first time period, or does not expect the first signal to overlap another uplink channel or signal. In this way, the access network device may receive, based on an SRS frequency hopping pattern, an uplink positioning reference signal SRS equivalent to or similar to a wideband signal, thereby improving positioning accuracy.

With reference to the first aspect or the second aspect, in still another possible implementation, the first signal and the second signal are positioning reference signals, and the first signal and the second signal are any one of the following: periodic signals, semi-persistent signals, or aperiodic signals.

In this implementation, when both the first signal and the second signal are periodic positioning reference signals, the terminal does not expect the access network device to configure more than one periodic frequency-hopping SRS resource to be sent in the first time period. That is, the access network device may configure only one periodic frequency-hopping SRS resource 1 to be sent in the first time period. In other words, the access network device configures one periodic frequency-hopping SRS resource 1 to be sent in the first time period, and does not configure another periodic frequency-hopping SRS resource 2. In this way, the access network device may receive, based on an SRS frequency hopping pattern, an uplink positioning reference signal SRS equivalent to or similar to a wideband signal, thereby improving positioning accuracy.

For another example, when both the first signal and the second signal are aperiodic positioning reference signals, the terminal does not expect the access network device to trigger more than one aperiodic frequency-hopping SRS resource to be sent in the first time period. That is, the access network device may trigger only one aperiodic frequency-hopping SRS resource 1 to be sent in the first time period. In other words, the access network device triggers one aperiodic frequency-hopping SRS resource 1 to be sent in the first time period, and does not trigger another aperiodic frequency-hopping SRS resource 2. In this way, the access network device may receive, based on an SRS frequency hopping pattern, an uplink positioning reference signal SRS equivalent to or similar to a wideband signal, thereby improving positioning accuracy. Alternatively, the terminal does not expect the access network device to trigger more than one aperiodic frequency-hopping SRS resource having an overlapping part.

For another example, when both the first signal and the second signal are semi-persistent positioning reference signals, the terminal does not expect the access network device to activate more than one semi-persistent frequency-hopping SRS resource to be sent in the first time period. That is, the access network device may activate only one semi-persistent frequency-hopping SRS resource 1 to be sent in the first time period. In other words, the access network device activates one semi-persistent frequency-hopping SRS resource 1 to be sent in the first time period, and does not activate another semi-persistent frequency-hopping SRS resource 2. In this way, the access network device may receive, based on an SRS frequency hopping pattern, an uplink positioning reference signal SRS equivalent to or similar to a wideband signal, thereby improving positioning accuracy. Alternatively, the terminal does not expect the access network device to activate more than one semi-persistent frequency-hopping SRS resource having an overlapping part.

According to a third aspect, a communication method is provided. The method is implemented by a terminal, or a chip or a circuit used in the terminal.

The method includes: The terminal receives resource configuration and/or scheduling information of a first signal from an access network device, and receiving configuration or scheduling information of a second signal, where the resource configuration and/or scheduling information of the first signal are/is used to configure and/or schedule a plurality of resources of the first signal, time domain positions of the plurality of resources are not overlapping, frequency domain positions of the plurality of resources are partially overlapping or entirely non-overlapping, and a time domain position of at least one of the plurality of resources of the first signal is not later than a time domain position of a resource of the second signal. In addition, the terminal sends only the first signal in a first time period.

According to the method, the terminal clearly defines an uplink sending behavior, thereby reducing constraints on configuration or scheduling on a network side, and clearly defines a behavior of the terminal performed when some configurations occur, so that the network side and the terminal have a consistent understanding of the behavior of the terminal.

With reference to the third aspect, in a possible implementation, the method further includes: The terminal skips sending the second signal in the first time period.

In this implementation, after the terminal receives the resource configuration and/or scheduling information of the first signal and the configuration or scheduling information of the second signal, the terminal sends only the first signal to the access network device in the first time period, and does not send the second signal in the first time period. In this way, sending or receiving of the complete first signal on the plurality of resources can be ensured.

With reference to the third aspect, in another possible implementation, the time domain position of at least one of the plurality of resources of the first signal is not later than the time domain position of the resource of the second signal, the first signal and the second signal are signals of a same type, and the signal type includes any one of the following: a periodic signal, a semi-persistent signal, or an aperiodic signal.

In this implementation, it is assumed that both the first signal and the second signal are periodic signals. The access network device configures more than one periodic frequency-hopping SRS resource to be sent in the first time period, or more than one periodic frequency hopping resource overlaps. The terminal sends only a periodic frequency-hopping SRS whose transmission start time is earliest within the first time period, and discards other periodic frequency-hopping SRSs whose transmission start time is later. Thus, a complete periodic frequency-hopping SRS can be ensured to be transmitted, and other periodic frequency-hopping SRSs do not need to be transmitted, thereby reducing power consumption of the terminal.

It is assumed that both the first signal and the second signal are aperiodic signals. The access network device triggers more than one aperiodic signal to be sent in the first time period, or more than one aperiodic resource overlaps. The terminal sends only an aperiodic signal whose transmission start time is earliest within the first time period, and discards other aperiodic signals whose transmission start time is later. The network side and the terminal have a consistent understanding of the behavior of the terminal.

It is assumed that both the first signal and the second signal are semi-persistent signals. The access network device activates more than one semi-persistent signal to be sent in the first time period, or more than one semi-persistent resource overlaps. The terminal sends only a semi-persistent signal whose transmission start time is earliest within the first time period, and discards other semi-persistent signals whose transmission start time is later. The network side and the terminal have a consistent understanding of the behavior of the terminal.

With reference to the third aspect, in still another possible implementation, the first signal is an aperiodic signal, and the second signal is a periodic signal or a semi-persistent signal.

In this implementation, the access network device triggers an aperiodic signal to be sent in the first time period, and further configures a periodic signal or activates a semi-persistent signal to be sent in the first time period, or an aperiodic resource overlaps a periodic or semi-persistent resource. Because a priority, an emergency degree, and the like of the aperiodic signal is higher than that of the periodic or semi-persistent signal, the terminal sends only the aperiodic signal in the first time period, and discards the periodic or semi-persistent signal. The network side and the terminal have a consistent understanding of the behavior of the terminal.

According to a fourth aspect, a communication method is provided. The method is implemented by a terminal, or a chip or a circuit used in the terminal.

The method includes: The terminal receives resource configuration and/or scheduling information of a first signal from an access network device, and receiving configuration or scheduling information of a second signal, where the resource configuration and/or scheduling information of the first signal are/is used to configure and/or schedule a plurality of resources of the first signal, time domain positions of the plurality of resources are not overlapping, frequency domain positions of the plurality of resources are partially overlapping or entirely non-overlapping, and a time domain position of at least one of the plurality of resources of the first signal is not later than a time domain position of a resource of the second signal. In addition, in a first time period, the terminal skips sending the first signal, and sends only the second signal.

According to the method, the terminal clearly defines an uplink sending behavior, thereby reducing constraints on configuration or scheduling on a network side, and clearly defines a behavior of the terminal performed when some configurations occur, so that the network side and the terminal have a consistent understanding of the behavior of the terminal.

With reference to the fourth aspect, in a possible implementation, the first signal is a periodic signal, and the second signal is an aperiodic signal or a semi-persistent signal.

In this implementation, the access network device configures a periodic signal to be sent in the first time period, and configures an aperiodic signal resource or a semi-persistent signal resource to be sent in the first time period; or an aperiodic signal resource or a semi-persistent signal resource overlaps a periodic signal resource. Because a priority of the aperiodic signal or the semi-persistent signal is higher than that of the periodic signal, in the first time period, the terminal does not send the first signal (discards the first signal), and sends only the second signal. In this way, it is ensured that a signal with a high priority is sent in time. For example, if the aperiodic signal or the semi-persistent signal is an uplink positioning reference signal SRS, an emergency positioning requirement is met.

With reference to the fourth aspect, in another possible implementation, the first signal is a semi-persistent signal, and the second signal is an aperiodic signal.

In this implementation, the access network device configures a semi-persistent signal, and configures an aperiodic signal resource to be sent in the first time period; or a semi-persistent signal resource overlaps a periodic signal resource. Because a priority of the aperiodic signal is higher than that of the semi-persistent signal, in the first time period, the terminal does not send the first signal (discards the first signal), and sends only the second signal. In this way, it is ensured that a signal with a high priority is sent in time. For example, if the aperiodic signal is an uplink positioning reference signal SRS, an emergency positioning requirement is met.

With reference to the third aspect or the fourth aspect, in still another possible implementation, a start position of the first time period is a start position of an earliest first signal in the first signal, and an end position of the first time period is an end position of a latest first signal in the first signal.

With reference to the third aspect or the fourth aspect, in still another possible implementation, the method further includes: The terminal receives configuration information of the first time period from the access network device.

With reference to the third aspect or the fourth aspect, in still another possible implementation, the configuration information of the first time period includes at least one of the following: a start system frame number, a start slot, and a start symbol of the first time period, a periodicity of the first time period, or duration of the first time period.

According to a fifth aspect, a communication apparatus is provided, and is configured to implement the communication method in any one of the second aspect, the third aspect, and the fourth aspect or the implementations of the second aspect, the third aspect, and the fourth aspect. The apparatus may be a terminal, or may be a module (for example, a processor, a chip, or a chip system) used in the terminal, or may be a logical node, a logical module, or software that can implement all or some functions of the terminal.

According to a sixth aspect, a communication apparatus is provided, and is configured to implement the communication method in any one of the first aspect or the implementations of the first aspect. The apparatus may be an access network device, or may be a module (for example, a processor, a chip, or a chip system) used in the access network device, or may be a logical node, a logical module, or software that can implement all or some functions of the access network device.

In a possible implementation, the communication apparatuses in the fifth aspect and the sixth aspect include units configured to separately perform the method in any one of the first aspect to the fourth aspect or the implementations of the first aspect to the fourth aspect.

The communication apparatus includes a transceiver unit and a processing unit.

When the communication apparatus is configured to implement the communication method in any one of the first aspect or the implementations of the first aspect, the processing unit is configured to generate resource configuration and/or scheduling information of a first signal, where the resource configuration and/or scheduling information are/is used to configure and/or schedule a plurality of resources of the first signal, time domain positions of the plurality of resources are not overlapping, and frequency domain positions of the plurality of resources are partially overlapping or entirely non-overlapping; the transceiver unit is configured to send the resource configuration and/or scheduling information of the first signal to a terminal; and the transceiver unit is further configured to receive the first signal from the terminal at positions of the plurality of resources in a first time period, where the terminal is not configured and/or not scheduled to send a second signal in the first time period.

Optionally, the transceiver unit is further configured to send configuration information of the first time period to the terminal.

When the communication apparatus is configured to implement the communication method in any one of the second aspect or the implementations of the second aspect, the transceiver unit is configured to receive resource configuration and/or scheduling information of a first signal from an access network device, where the resource configuration and/or scheduling information are/is used to configure and/or schedule a plurality of resources of the first signal, time domain positions of the plurality of resources are not overlapping, and frequency domain positions of the plurality of resources are partially overlapping or entirely non-overlapping; the processing unit is configured to generate the first signal; and the transceiver unit is further configured to send the first signal at positions of the plurality of resources in a first time period, where the terminal does not expect the access network device to configure or schedule the terminal to send a second signal in the first time period.

Optionally, the transceiver unit is further configured to receive configuration information of the first time period from the access network device.

When the communication apparatus is configured to implement the communication method in any one of the third aspect or the implementations of the third aspect, the transceiver unit is configured to: receive resource configuration and/or scheduling information of a first signal from an access network device, and receive configuration or scheduling information of a second signal, where the resource configuration and/or scheduling information of the first signal are/is used to configure and/or schedule a plurality of resources of the first signal, time domain positions of the plurality of resources are not overlapping, frequency domain positions of the plurality of resources are partially overlapping or entirely non-overlapping, and a time domain position of at least one of the plurality of resources of the first signal is not later than a time domain position of a resource of the second signal; the processing unit is configured to generate the first signal; and the transceiver unit is further configured to send only the first signal in a first time period.

Optionally, the transceiver unit is further configured to skip sending the second signal in the first time period.

When the communication apparatus is configured to implement the communication method in any one of the fourth aspect or the implementations of the fourth aspect, the transceiver unit is configured to: receive resource configuration and/or scheduling information of a first signal from an access network device, and receive configuration or scheduling information of a second signal, where the resource configuration and/or scheduling information of the first signal are/is used to configure and/or schedule a plurality of resources of the first signal, time domain positions of the plurality of resources are not overlapping, frequency domain positions of the plurality of resources are partially overlapping or entirely non-overlapping, and a time domain position of at least one of the plurality of resources of the first signal is not later than a time domain position of a resource of the second signal; the processing unit is configured to generate the second signal; and the transceiver unit is further used by the terminal to skip sending the first signal, and send only the second signal in a first time period.

Optionally, the transceiver unit is further configured to receive configuration information of the first time period from the access network device.

In another possible implementation, the communication apparatuses in the fifth aspect and the sixth aspect each include a processor coupled to a memory. The processor is configured to implement a corresponding function in the foregoing communication method performed by the apparatus. The memory is configured to be coupled to the processor, and stores a program (instructions) and/or data necessary for the apparatus. Optionally, the communication apparatus may further include a communication interface, configured to implement communication between the apparatus and another network element. Optionally, the memory may be located inside the communication apparatus, or may be located outside the communication apparatus.

In still another possible implementation, the communication apparatuses in the fifth aspect and the sixth aspect each include a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is a transceiver circuit or an input/output interface.

When the communication apparatuses in the fifth aspect and the sixth aspect each are a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

According to a seventh aspect, a computer-readable storage medium is provided. The computer-readable storage medium stores a computer program or instructions. When the computer program or the instructions are executed, the methods in the foregoing aspects are implemented.

According to an eighth aspect, a computer program product including instructions is provided. When the instructions are run on a communication apparatus, the communication apparatus is caused to perform the methods in the foregoing aspects.

According to a ninth aspect, a communication system is provided. The communication system includes the communication apparatus in the fifth aspect and the communication apparatus in the sixth aspect.

### BRIEF DESCRIPTION OF DRAWINGS

FIG. 1 is a diagram of a communication system according to an embodiment of this application;
FIG. 2 is a diagram of an SRS frequency hopping pattern;
FIG. 3 is a diagram of switching time for frequency-hopping SRS transmission;
FIG. 4 is a diagram of frequency-hopping SRS transmission configured in a time division duplex system;
FIG. 5A and FIG. 5B are diagrams of switching from a resource position for sending a frequency-hopping SRS to a resource position for downlink receiving or uplink sending;
FIG. 6 is a diagram of a system architecture of uplink and downlink communication and positioning according to an embodiment of this application;
FIG. 7 is a schematic flowchart of a communication method according to an embodiment of this application;
FIG. 8 is a diagram of an example of a first time period according to an embodiment of this application;
FIG. 9A is a diagram of receiving, in a first time period, a MAC CE carried on a PDSCH;
FIG. 9B is a diagram of receiving, in a first time period, DCI carried on a PDCCH;
FIG. 10A is a diagram of an example of overlapping signal resources according to an embodiment of this application;
FIG. 10B is a diagram of an example of non-overlapping signal resources according to an embodiment of this application;
FIG. 11 is a schematic flowchart of another communication method according to an embodiment of this application;
FIG. 12 is a schematic flowchart of still another communication method according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of still another communication apparatus according to an embodiment of this application.

### DESCRIPTION OF EMBODIMENTS

The following further describes the solutions of this application with reference to the accompanying drawings.

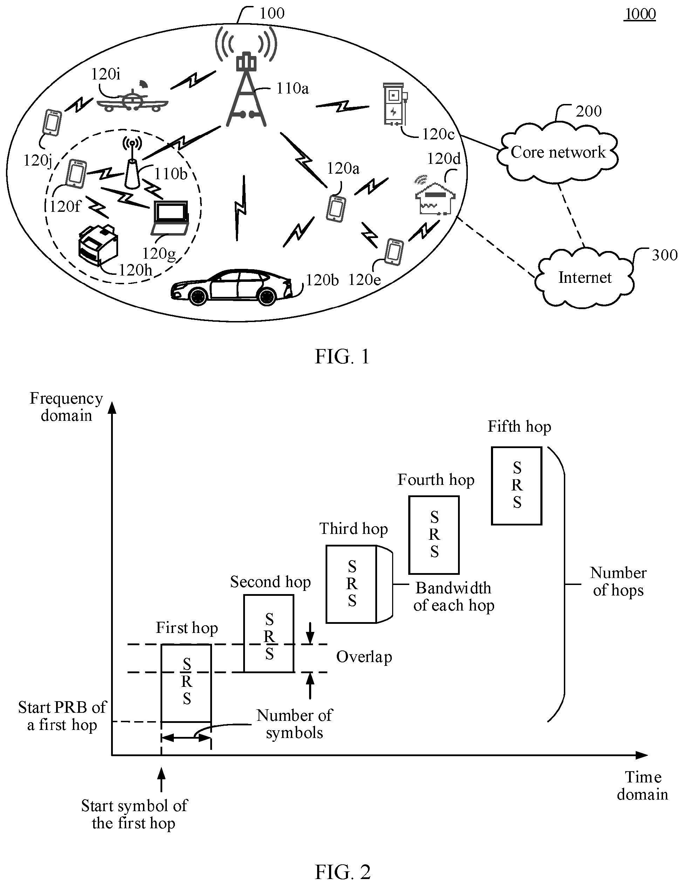

FIG. 1 is a diagram of a possible and non-limiting system. As shown in FIG. 1, the communication system 1000 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may also include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The RAN node 110 may also be referred to as an access network device, a RAN entity, an access node, or the like sometimes, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative to each other. For example, a network element 120i in FIG. 1 may be a helicopter or an uncrewed aerial vehicle, and may be configured as a mobile base station. For those terminals 120j that access the RAN 100 via the network element 120i, the network element 120i is a base station. However, for the base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (media/medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between the network elements in the ORAN system and protocol layer functions that may be implemented by the network elements, refer to Table 1.

**Table 1**

| ORAN network element | 3GPP protocol layer function |
|---|---|
| O-CU-CP | RRC+PDCP-C |
| O-CU-UP | SDAP+PDCP-U |
| O-DU | RLC+MAC+PHY-high |
| O-RU | PHY-low |

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative to each other. For example, the helicopter or the uncrewed aerial vehicle 120i in FIG. 1 may be configured as a mobile base station. For those terminals 120j that access the radio access network 100 via 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

In embodiments of this application, the base station is also referred to as an access network device. An apparatus configured to implement a function of the access network device may be an access network device, or may be an apparatus that can support the access network device in implementing the function, for example, a chip system, a hardware circuit, a software module, or a combination of a hardware circuit and a software module. The apparatus may be installed in the access network device or used in conjunction with the access network device. In embodiments of this application, an example in which the apparatus configured to implement the function of the access network device is the access network device is merely used for description, and constitutes no limitation on the solutions in embodiments of this application.

It may be understood that this application may be applied between the access network device and the terminal.

It should be understood that quantities and types of devices in the communication system shown in FIG. 1 are merely used as an example, and this application is not limited thereto. In actual application, the communication system may further include more terminals and more access network devices, and may further include another network element, for example, may include a core network device and/or a network element configured to implement an artificial intelligence function.

It may be understood that all or some functions implemented by one or more of the terminal, the access network device, the core network device, or the network element configured to implement the artificial intelligence function may be virtualized, that is, implemented through one or both of a dedicated processor or a general-purpose processor and a corresponding software module. Because the terminal and the access network device are related to an air interface transmission interface, a transceiver function of the interface may be implemented by hardware. Core network devices such as an operations, administration, and maintenance (operations, administration, and maintenance, OAM) network element can all be virtualized. Optionally, functions of one or more of the virtualized terminal, access network device, core network device, or network element configured to implement the artificial intelligence function may be implemented by a cloud device, for example, implemented by a cloud device in an over-the-top (over-the-top, OTT) system.

The following explains several terms in embodiments of this application.

### (1) Reduced capability terminal

Compared with a conventional terminal, the reduced capability terminal is a simplified terminal with lower complexity. According to a specified maximum channel bandwidth capability that a terminal implementation needs to support, within FR1 (410 MHz to 7125 MHz), a mandatory capability of the reduced capability terminal is to support a maximum terminal channel bandwidth of 20 MHz, while a mandatory capability of the conventional terminal is to support a maximum terminal channel bandwidth of 100 MHz; and within FR2 (24250 MHz to 52600 MHz), a mandatory capability of the reduced capability terminal is to support a maximum terminal channel bandwidth of 100 MHz, while a mandatory capability of the conventional terminal needs to support a maximum terminal channel bandwidth of 400 MHz.

### (2) Frequency-hopping transmission for positioning

For a carrier with a 100 MHz bandwidth within FR1, an access network device may configure the conventional terminal to send a wideband SRS (for example, 100 MHz) for positioning. The access network device directly receives and measures the 100 MHz SRS signal via several transmission reception points (transmission reception points, TRPs) deployed at different geographical positions, to obtain time (time of arrival, ToA) from sending the SRS by the terminal to receiving the SRS by the TRPs, and reports a ToA measurement quantity to a location management function (location management function, LMF). The LMF finally calculates a position of the terminal. This process is an uplink positioning method based on a cellular network. ToA measurement accuracy is determined by the bandwidth for the SRS. A larger bandwidth indicates higher measurement accuracy and a more accurate position of the terminal that is finally obtained through positioning.

However, for the reduced capability terminal, a maximum bandwidth for a single SRS transmission is 20 MHz. If a measurement quantity with same or similar accuracy as those with a 100 MHz SRS needs to be obtained, the reduced capability terminal needs to send the SRS over multiple frequency hops, so that frequency-hopping transmission of a narrowband SRS is equivalent or similar to the transmission of a wideband SRS by the terminal, as shown in an SRS frequency hopping pattern in FIG. 2. A receiving end receives and processes the frequency-hopping transmitted SRS, to obtain a measurement result equivalent to or similar to that of measuring the 100 MHz SRS.

The reduced capability terminal obtains configuration information sent by the access network device, including a frequency-domain position of a start physical resource block (physical resource block, PRB) of a first hop in time domain, a hop bandwidth, a number of overlapping (overlapping) resources (for example, a number of overlapping PRBs) between two consecutive hops in frequency domain, a start slot offset and a start symbol of the first hop in time domain, a start slot offset and a start symbol of each hop after the first hop, a number of consecutive symbols of each hop, and a total number of hops. A pattern for frequency-hopping SRS transmission may be uniquely determined based on the configuration information, as shown in FIG. 2. After obtaining the configuration information, the terminal sends the SRS based on the frequency hopping pattern.

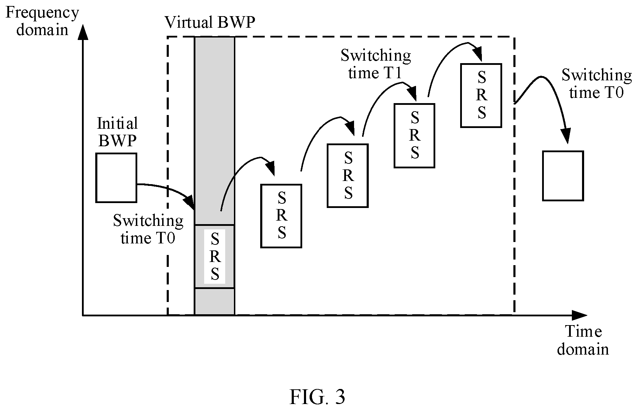

In addition, FIG. 3 is a diagram of switching time for frequency-hopping SRS transmission. When the reduced capability terminal sends the SRS based on the frequency hopping pattern, the terminal needs switching time to switch from a bandwidth position corresponding to one hop to a bandwidth position corresponding to another hop in frequency domain for SRS sending. Particularly, it is considered that a position of the first hop or a last hop is outside an initial BWP or an active BWP of the terminal, or a magnitude of a subcarrier spacing, a bandwidth, or a cyclic prefix (cyclic prefix, CP) of the first hop is different from that of the initial BWP or the active BWP. Therefore, switching time (switching time T0 in the figure) for the first hop or the last hop is longer than switching time between two intermediate hops. Possible values include *{100 µs, 140 µs, 200 µs, 300 µs, 500 µs}*, and these values are applicable to FR1 and FR2. Possible values of longest switching time (switching time T1 in the figure) between the two consecutive intermediate hops include {*35 µs, 70 µs, 125 µs*}. The values depend on a capability of the terminal for implementation.

It may be understood that a terminal configured by the access network device for frequency-hopping SRS transmission may not be limited to the reduced capability terminal. For the conventional terminal, to reduce power consumption of the terminal, an active BWP of the terminal may be configured to be small, and the SRS can be sent only in the active BWP. Therefore, a bandwidth available to send the SRS is limited by a bandwidth of the active BWP, and a requirement for sending a wideband SRS to implement high-accuracy positioning cannot be met.

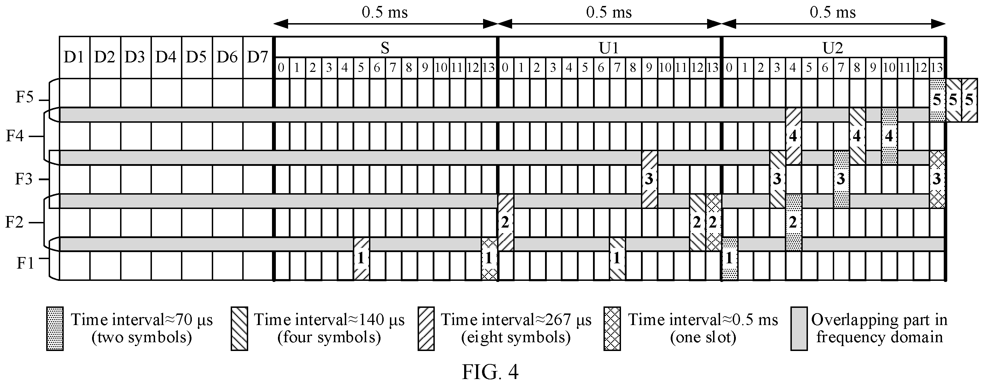

When the terminal is configured to send a positioning frequency-hopping SRS, the terminal sends the SRS based on the foregoing frequency hopping pattern. In addition, FIG. 4 is a diagram of frequency-hopping SRS transmission configured in a time division duplex (time-division multiplexing, TDD) system. In the TDD system, a slot used for downlink sending and a slot used for uplink sending are staggered through time division in time domain (in the figure, an example in which uplink (uplink, UL):downlink (downlink, DL)=2:8, and a subcarrier spacing (subcarrier space, SCS) is 30 kHz is used for description). Considering flexibility of configuring the frequency hopping pattern by the access network device, the terminal may fail to send the SRS through consecutive frequency hopping in consecutive slots used for uplink sending, and in a last hop, sending needs to be performed in an uplink slot of a next TDD periodicity. Therefore, before completing the last hop, the terminal needs to receive a downlink channel or signal in a downlink slot.

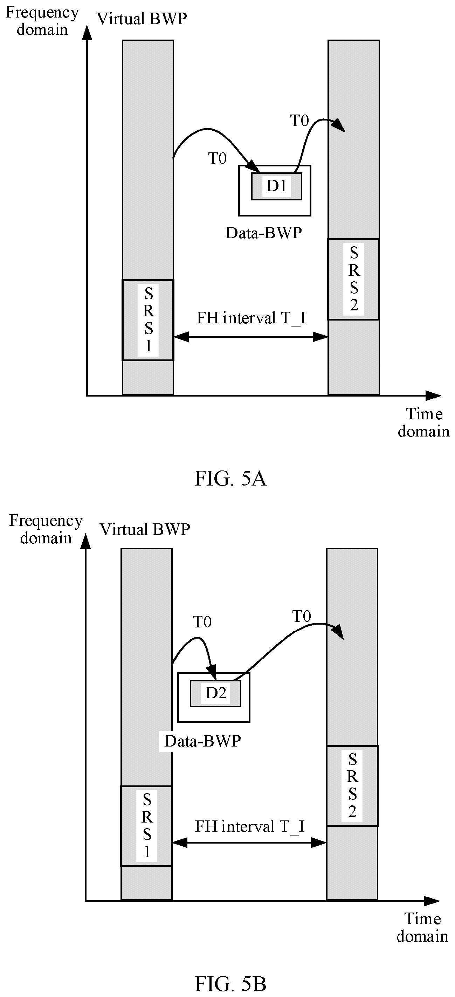

Alternatively, regardless of the TDD system or a frequency division duplex (frequency-division multiplexing, FDD) system, considering the flexibility of configuring the frequency hopping pattern by the access network device, the access network device may schedule/configure the terminal to receive a downlink channel or signal or schedule/configure the terminal to send an uplink channel or signal between every two hops. Regardless of downlink receiving or uplink sending, the terminal needs switching time to switch from a resource position for sending a frequency-hopping SRS to a resource position for downlink receiving or uplink sending, as shown in FIG. 5A and FIG. 5B. If time needed for switching from the position for sending the SRS to the position for downlink receiving or uplink sending, and then switching from the position for downlink receiving or uplink sending to a position for sending an SRS in a next hop is less than a time domain interval between the two hops, the terminal may switch a position for downlink receiving or uplink sending without affecting sending of the frequency-hopping SRS.

When a time interval between two consecutive hops of the frequency-hopping SRS is long, the terminal needs to switch between a data active BWP or initial BWP and the resource position of the frequency-hopping SRS. Consequently, power consumption of the terminal is high.

For the foregoing problem, this application provides a communication solution. A configuration behavior and/or a scheduling behavior of an access network device are/is clearly defined, so that a terminal does not need to switch between an initial BWP or an active BWP and a frequency-hopping SRS, thereby reducing power consumption of a network and the terminal. Alternatively, the terminal clearly defines an uplink sending behavior, to reduce power consumption of the terminal.

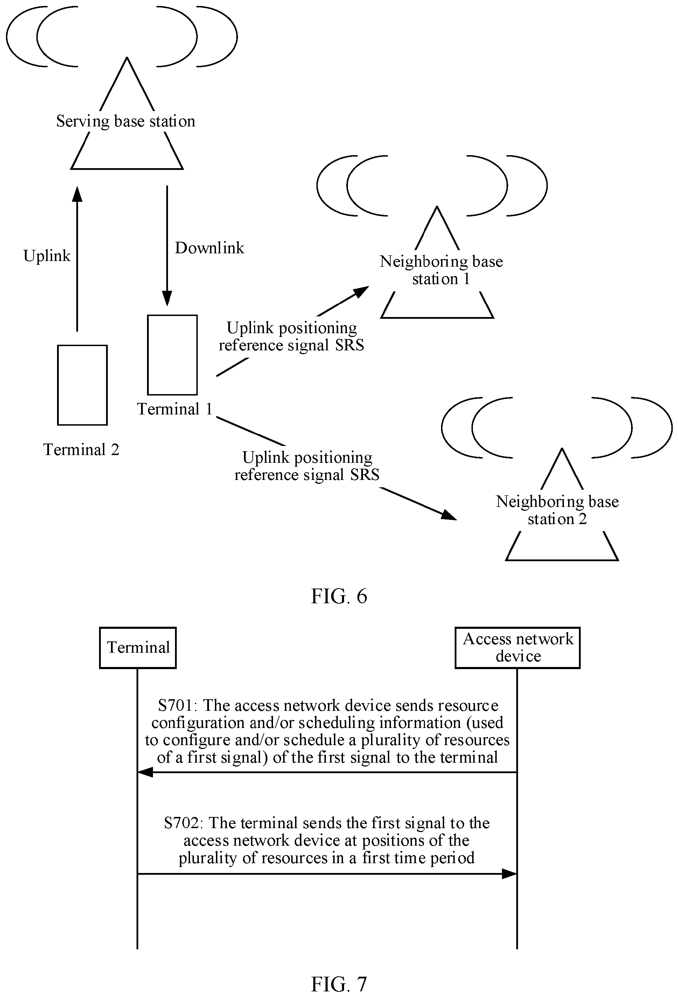

The communication solution in this application may be applied to a plurality of communication scenarios, for example, uplink and downlink communication and uplink positioning scenarios. FIG. 6 is a diagram of a system architecture of uplink and downlink communication and positioning according to an embodiment of this application. A terminal may perform uplink and downlink communication with a serving base station of the terminal, and the terminal may further send an uplink positioning reference signal SRS to a neighboring base station to perform uplink positioning.

FIG. 7 is a schematic flowchart of a communication method according to an embodiment of this application. For example, the method may include the following steps.

S701: An access network device sends resource configuration and/or scheduling information of a first signal to a terminal. Correspondingly, the terminal receives the resource configuration and/or scheduling information of the first signal.

In this embodiment, the access network device configures and/or schedules the terminal to send the first signal on a plurality of resources. Therefore, the access network device sends the resource configuration and/or scheduling information of the first signal to the terminal. The resource configuration and/or scheduling information are/is used to configure and/or schedule the plurality of resources of the first signal. Time domain positions of the plurality of resources are not overlapping, and frequency domain positions of the plurality of resources are partially overlapping or entirely non-overlapping. For example, the first signal may be the foregoing frequency-hopping transmitted SRS. The SRS is used for uplink positioning. Further, the access network device may configure an SRS pattern. The SRS may be periodic, aperiodic, or semi-persistent.

For example, the access network device may send the resource configuration information of the first signal to the terminal by using radio resource control (radio resource control, RRC) signaling or the like.

For example, the access network device may send the resource scheduling information of the first signal to the terminal by using downlink control information (downlink control information, DCI) or the like, to activate the configured resource of the first signal.

S702: The terminal sends the first signal to the access network device at positions of the plurality of resources in a first time period. Correspondingly, the access network device receives the first signal from the terminal at the positions of the plurality of resources in the first time period.

After the terminal receives the resource configuration and/or scheduling information of the first signal, considering that a positioning accuracy requirement needs to be met, the terminal sends the first signal to the access network device at the positions of the plurality of resources in the first time period. The first time period may also be referred to as a first time window.

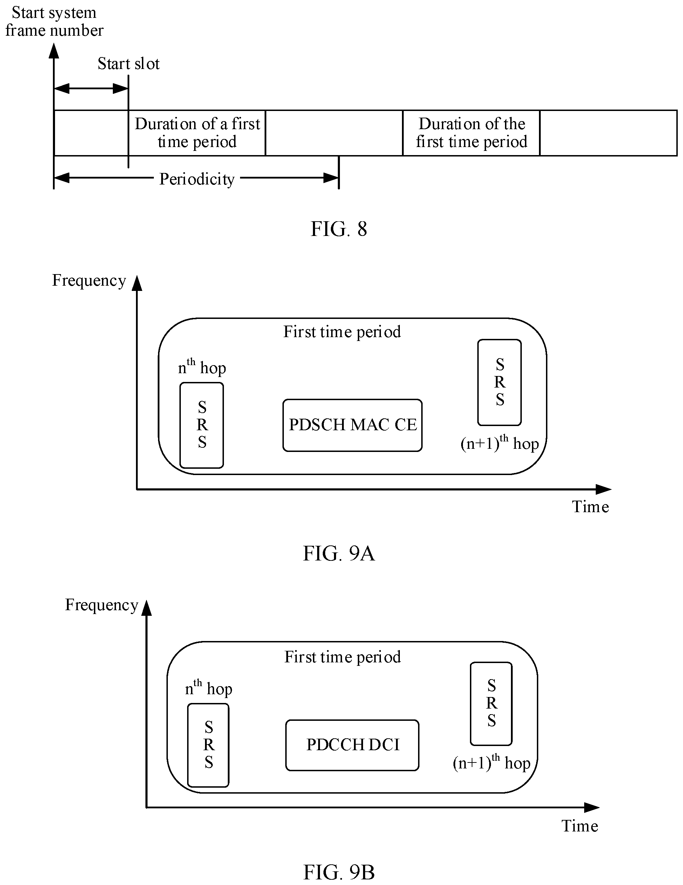

The first time period may be predefined in a protocol, or may be pre-negotiated by the terminal and the access network device, or may be configured by the access network device. In this case, the method may further include the following step: The access network device sends configuration information of the first time period to the terminal. Correspondingly, the terminal receives the configuration information of the first time period. The configuration information of the first time period includes at least one of the following: a start system frame number (system frame number, SFN), a start slot, and a start symbol of the first time period, a periodicity of the first time period, or duration of the first time period. For example, the first time period may be configured periodically. The configured first time period is shown in FIG. 8.

A start position of the first time period is a start position of an earliest first signal in the first signal, and an end position of the first time period is an end position of a latest first signal in the first signal.

Because the first time period and the plurality of resources of the first signal are configured by the access network device for the terminal, the access network device may configure a proper first time period and a plurality of proper resources of the first signal, so that the terminal sends the first signal on a plurality of first resources in the first time period based on the configuration.

To avoid high power consumption of the terminal caused because the terminal needs to switch between a data active BWP or initial BWP and a resource position of a frequency-hopping SRS, in this embodiment, the access network device does not configure and/or not schedule the terminal to send a second signal in the first time period. In other words, if the plurality of resources of the first signal are configured and/or scheduled in the first time period, the terminal sends only the first signal, and does not send another uplink channel or signal in the first time period. It may be understood that, receiving that is in the first time period and that is of a downlink channel (a medium access control control element (media/medium access control control element, MAC CE) carried on a physical downlink shared channel (physical downlink shared channel, PDSCH)) shown in FIG. 9A or a downlink signal (DCI carried on a physical downlink control channel (physical downlink control channel, PDCCH)) shown in FIG. 9B is not affected, that is, the terminal may complete, in the first time period, the receiving of the downlink channel or signal. However, an uplink channel or signal activated by using the MAC CE or scheduled by using the DCI cannot appear in the first time period. Alternatively, the uplink channel or signal activated by using the MAC CE or scheduled by using the DCI appears in the first time period, but the terminal does not send the uplink channel or signal in the first time period.

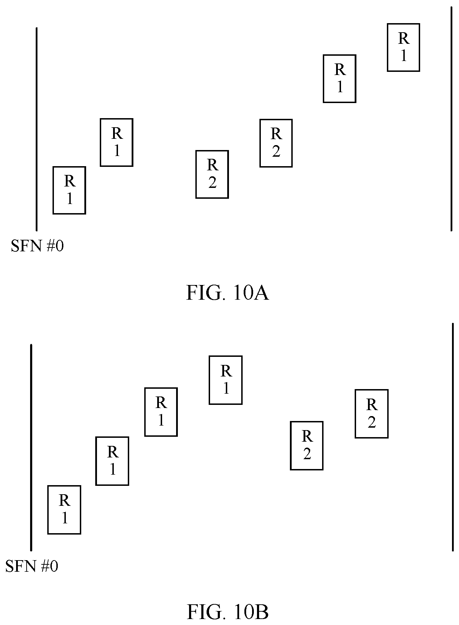

The terminal does not expect the access network device to configure a redundant resource other than the plurality of resources of the first signal to be sent in the first time period. That is, the access network device may configure only the plurality of resources of the first signal to be sent in the first time period. In other words, the access network device configures the plurality of resources of the first signal to be sent in the first time period, and does not configure a plurality of resources of the second signal to be sent in the first time period. In this way, the access network device may receive, based on an SRS frequency hopping pattern, an uplink positioning reference signal SRS equivalent to or similar to a wideband signal, thereby improving positioning accuracy. For example, the access network device does not configure overlapping signal resources shown in FIG. 10A (a plurality of R1 signals and a plurality of R2 signals partially overlap at frequency domain positions in the first time period), and the terminal does not expect the access network device to configure the overlapping signal resources to be sent in the first time period. The access network device may configure non-overlapping signal resources shown in FIG. 10B (a plurality of R1 signals and a plurality of R2 signals do not overlap at frequency domain positions in the first time period).

In an example, the first signal is a positioning reference signal, and the second signal is a positioning reference signal. The first signal and the second signal are any one of the following: periodic signals, semi-persistent signals, or aperiodic signals.

For example, when both the first signal and the second signal are periodic positioning reference signals, the terminal does not expect the access network device to configure more than one periodic frequency-hopping SRS resource to be sent in the first time period. That is, the access network device may configure only one periodic frequency-hopping SRS resource 1 to be sent in the first time period. In other words, the access network device configures one periodic frequency-hopping SRS resource 1 to be sent in the first time period, and does not configure another periodic frequency-hopping SRS resource 2 to be sent in the first time period. In this way, the access network device may receive, based on an SRS frequency hopping pattern, an uplink positioning reference signal SRS equivalent to or similar to a wideband signal, thereby improving positioning accuracy.

For another example, when both the first signal and the second signal are aperiodic positioning reference signals, the terminal does not expect the access network device to trigger more than one aperiodic frequency-hopping SRS resource to be sent in the first time period. That is, the access network device may trigger only one aperiodic frequency-hopping SRS resource 1 to be sent in the first time period. In other words, the access network device triggers one aperiodic frequency-hopping SRS resource 1 to be sent in the first time period, and does not trigger another aperiodic frequency-hopping SRS resource 2 to be sent in the first time period. In this way, the access network device may receive, based on an SRS frequency hopping pattern, an uplink positioning reference signal SRS equivalent to or similar to a wideband signal, thereby improving positioning accuracy. Alternatively, the terminal does not expect the access network device to trigger more than one overlapping aperiodic frequency-hopping SRS resource to be sent in the first time period.

For another example, when both the first signal and the second signal are semi-persistent positioning reference signals, the terminal does not expect the access network device to activate more than one semi-persistent frequency-hopping SRS resource to be sent in the first time period. That is, the access network device may activate only one semi-persistent frequency-hopping SRS resource 1 to be sent in the first time period. In other words, the access network device activates one semi-persistent frequency-hopping SRS resource 1 to be sent in the first time period, and does not activate another semi-persistent frequency-hopping SRS resource 2 to be sent in the first time period. In this way, the access network device may receive, based on an SRS frequency hopping pattern, an uplink positioning reference signal SRS equivalent to or similar to a wideband signal, thereby improving positioning accuracy. Alternatively, the terminal does not expect the access network device to activate more than one overlapping semi-persistent frequency-hopping SRS resource to be sent in the first time period.

It may be understood that the second signal may be a frequency hopping signal like the first signal, or may not be a frequency hopping signal.

In another example, the first signal is a positioning reference signal, and the second signal is an uplink channel. The terminal does not expect the access network device to configure, activate, or schedule another uplink channel or signal to be sent in the first time period, or does not expect the first signal to overlap another uplink channel or signal in the first time period. Overlapping means that there is another uplink channel or signal in a span of a complete frequency-hopping SRS pattern. The second signal may be a non-frequency-hopping uplink positioning reference signal SRS, or an SRS other than the uplink positioning reference signal SRS (for example, used for beam management, channel measurement for codebook-based or non-codebook-based downlink transmission, or channel measurement for antenna switching), or a physical uplink shared channel (physical uplink shared channel, PUSCH), or a physical uplink control channel (physical uplink control channel, PUCCH), or an uplink physical random access channel (physical random access channel, PRACH), or an uplink scheduling request (scheduling request, SR). For example, the access network device configures only one periodic frequency-hopping SRS resource 1 to be sent in the first time period. In other words, the access network device configures one periodic frequency-hopping SRS resource 1 to be sent in the first time period, and does not configure, activate, or schedule another uplink channel or signal to be sent in the first time period, or does not configure, activate, or schedule one periodic frequency-hopping SRS resource 1 to overlap another uplink channel or signal in the first time period. For another example, the access network device may activate only one semi-persistent frequency-hopping SRS resource 1 to be sent in the first time period. In other words, the access network device activates one semi-persistent frequency-hopping SRS resource 1 to be sent in the first time period, and does not configure, activate, or schedule another uplink channel or signal to be sent in the first time period, or does not configure, activate, or schedule one semi-persistent frequency-hopping SRS resource 1, overlapping another uplink channel or signal, to be sent in the first time period. For another example, the access network device may activate only one semi-persistent frequency-hopping SRS resource 1 to be sent in the first time period. In other words, the access network device activates one semi-persistent frequency-hopping SRS resource 1 to be sent in the first time period, and does not configure, activate, or schedule another uplink channel or signal to be sent in the first time period, or does not configure, activate, or schedule one semi-persistent frequency-hopping SRS resource 1, overlapping another uplink channel or signal, to be sent in the first time period. In this way, the access network device may receive, based on an SRS frequency hopping pattern, an uplink positioning reference signal SRS equivalent to or similar to a wideband signal, thereby improving positioning accuracy. Alternatively, the terminal does not expect the access network device to configure, activate, or schedule more than one overlapping uplink channel or signal to be sent in the first time period.

According to the communication method provided in this embodiment of this application, the access network device configures and/or schedules the plurality of resources of the first signal, so that the terminal can send the first signal at the positions of the plurality of resources in the first time period, and does not configure and/or not schedule the terminal to send the second signal in the first time period. A configuration behavior and/or a scheduling behavior of the access network device are/is clearly defined, so that the terminal does not need to switch between an initial BWP or an active BWP and a frequency-hopping SRS, or between a plurality of frequency-hopping SRS resources, thereby reducing power consumption of a network and the terminal. In addition, when the first signal is used for uplink positioning, the access network device may receive, based on a frequency hopping pattern, a first signal equivalent to or similar to a wideband signal, thereby improving positioning accuracy.

In the foregoing embodiment descriptions, the configuration behavior and/or the scheduling behavior of the access network device are/is clearly defined, so that the terminal does not need to switch between the initial BWP or the active BWP and the frequency-hopping SRS, or between the plurality of frequency-hopping SRS resources, thereby reducing the power consumption of the network and the terminal.

In the following embodiment descriptions, the terminal clearly defines an uplink sending behavior, to reduce power consumption of the terminal.

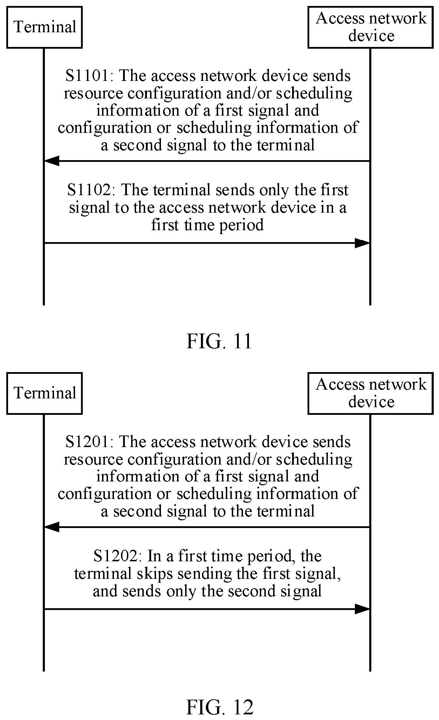

FIG. 11 is a schematic flowchart of another communication method according to an embodiment of this application. For example, the method may include the following steps.

S1101: An access network device sends resource configuration and/or scheduling information of a first signal and configuration or scheduling information of a second signal to a terminal. Correspondingly, the terminal receives the resource configuration and/or scheduling information of the first signal and the configuration or scheduling information of the second signal from the access network device.

In this embodiment, the access network device configures and/or schedules a plurality of resources of the first signal, and configures and/or schedules a resource of the second signal. The access network device sends the resource configuration and/or scheduling information of the first signal and the configuration or scheduling information of the second signal to the terminal. In other words, in addition to configuring the plurality of resources of the first signal, the access network device further configures the resource of the second signal; or the resource of the second signal overlaps at least one of the plurality of resources of the first resource. The "configuration" may be sending configuration information by using RRC signaling or the like, and the "scheduling" may be performing scheduling by using DCI or the like.

It may be understood that the resource configuration and/or scheduling information of the first signal and the configuration or scheduling information of the second signal may be in a same message, or may be in different messages. In this embodiment, a sequence in which the access network device sends the resource configuration and/or scheduling information of the first signal and the configuration or scheduling information of the second signal is not limited, and a sequence in which the terminal receives the resource configuration and/or scheduling information of the first signal and the configuration or scheduling information of the second signal is not limited.

The resource configuration and/or scheduling information of the first signal are/is used to configure and/or schedule the plurality of resources of the first signal, time domain positions of the plurality of resources are not overlapping, and frequency domain positions of the plurality of resources are partially overlapping or entirely non-overlapping. The first signal may be a frequency hopping signal, for example, a frequency-hopping transmitted uplink positioning reference signal SRS. For the meaning of "overlapping", refer to the foregoing descriptions.

A time domain position of at least one of the plurality of resources of the first signal is not later than a time domain position of the resource of the second signal. In other words, the time domain position of at least one of the plurality of resources of the first signal is earlier than the time domain position of the resource of the second signal, or the time domain position of at least one of the plurality of resources of the first signal is the same as the time domain position of the resource of the second signal.

In an example, the first signal and the second signal are signals of a same type. For example, the first signal is a periodic signal (for example, a frequency-hopping transmitted SRS), and the second signal is also a periodic signal; or the first signal is a semi-persistent signal, and the second signal is also a semi-persistent signal; or the first signal is an aperiodic signal, and the second signal is also an aperiodic signal.

In another example, the first signal is an aperiodic signal, and the second signal is a periodic signal or a semi-persistent signal.

S1102: The terminal sends only the first signal to the access network device in a first time period. Correspondingly, the access network device receives the first signal in the first time period.

After the terminal receives the resource configuration and/or scheduling information of the first signal and the configuration or scheduling information of the second signal, the terminal sends only the first signal to the access network device in the first time period, and does not send the second signal in the first time period. In this way, sending or receiving of the complete first signal on the plurality of resources can be ensured. When the first signal is a frequency-hopping SRS, the access network device may receive, based on an SRS frequency hopping pattern, an uplink positioning reference signal SRS equivalent to or similar to a wideband signal, thereby improving positioning accuracy.

In the foregoing first example, it is assumed that both the first signal and the second signal are periodic signals. The access network device configures more than one periodic frequency-hopping SRS resource to be sent in the first time period, or more than one periodic frequency hopping resource overlaps in the first time period. The terminal sends only a periodic frequency-hopping SRS whose transmission start time is earliest within the first time period, and discards other periodic frequency-hopping SRS whose transmission start time is later. Thus, a complete periodic frequency-hopping SRS can be ensured to be transmitted, and other periodic frequency-hopping SRSs do not need to be transmitted, thereby reducing power consumption of the terminal.

It is assumed that both the first signal and the second signal are aperiodic signals. The access network device triggers more than one aperiodic signal to be sent in the first time period, or more than one aperiodic resource overlaps in the first time period. The terminal sends only an aperiodic signal whose transmission start time is earliest within the first time period, and discards other aperiodic signals whose transmission start time is later. A network side and the terminal have a consistent understanding of the behavior of the terminal.

It is assumed that both the first signal and the second signal are semi-persistent signals. The access network device activates more than one semi-persistent signal to be sent in the first time period, or more than one semi-persistent resource overlaps in the first time period. The terminal sends only a semi-persistent signal whose transmission start time is earliest within the first time period, and discards other semi-persistent signals whose transmission start time is later. A network side and the terminal have a consistent understanding of the behavior of the terminal.

In another example, the first signal is an aperiodic signal, and the second signal is a periodic signal or a semi-persistent signal. In addition to triggering an aperiodic signal to be sent in the first time period, the access network device further configures a periodic signal or activates a semi-persistent signal to be sent in the first time period, or an aperiodic resource overlaps a periodic or semi-persistent resource in the first time period. Because a priority, an emergency degree, and the like of the aperiodic signal is higher than that of the periodic or semi-persistent signal, the terminal sends only the aperiodic signal in the first time period, and discards the periodic or semi-persistent signal. A network side and the terminal have a consistent understanding of the behavior of the terminal.

The first time period may be predefined in a protocol, or may be pre-negotiated by the terminal and the access network device, or may be configured by the access network device. In this case, the method may further include the following step: The access network device sends configuration information of the first time period to the terminal. Correspondingly, the terminal receives the configuration information of the first time period. The configuration information of the first time period includes at least one of the following: a start system frame number, a start slot, and a start symbol of the first time period, a periodicity of the first time period, or duration of the first time period. For example, the first time period may be configured periodically. The configured first time period is shown in FIG. 8.

A start position of the first time period is a start position of the second signal in time domain, and an end position of the first time period is an end position of the second signal in time domain.

For example, when the second signal is a frequency-hopping transmitted SRS, the second signal is sent at a plurality of resource positions. In this case, the start position of the first time period is a start position of an earliest second signal in the second signal, and the end position of the first time period is an end position of a latest second signal in the second signal.

According to the communication method provided in this embodiment of this application, the terminal clearly defines an uplink sending behavior, thereby reducing constraints on configuration or scheduling on the network side, and clearly defines a behavior of the terminal performed when some configurations occur, so that the network side and the terminal have a consistent understanding of the behavior of the terminal.

The following describes another embodiment in which a terminal clearly defines an uplink sending behavior, to reduce power consumption of the terminal.

FIG. 12 is a schematic flowchart of still another communication method according to an embodiment of this application. For example, the method may include the following steps.

S1201: An access network device sends resource configuration and/or scheduling information of a first signal and configuration or scheduling information of a second signal to a terminal. Correspondingly, the terminal receives the resource configuration and/or scheduling information of the first signal and the configuration or scheduling information of the second signal from the access network device.

In this embodiment, the access network device configures and/or schedules a plurality of resources of the first signal, and configures and/or schedules a resource of the second signal. The access network device sends the resource configuration and/or scheduling information of the first signal and the configuration or scheduling information of the second signal to the terminal. In other words, in addition to configuring the plurality of resources of the first signal, the access network device further configures the resource of the second signal; or the resource of the second signal overlaps at least one of the plurality of resources of the first resource. The "configuration" may be sending configuration information by using RRC signaling or the like, and the "scheduling" may be performing scheduling by using DCI or the like.

It may be understood that the resource configuration and/or scheduling information of the first signal and the configuration or scheduling information of the second signal may be in a same message, or may be in different messages. In this embodiment, a sequence in which the access network device sends the resource configuration and/or scheduling information of the first signal and the configuration or scheduling information of the second signal is not limited, and a sequence in which the terminal receives the resource configuration and/or scheduling information of the first signal and the configuration or scheduling information of the second signal is not limited.

The resource configuration and/or scheduling information of the first signal are/is used to configure and/or schedule the plurality of resources of the first signal, time domain positions of the plurality of resources are not overlapping, and frequency domain positions of the plurality of resources are partially overlapping or entirely non-overlapping. The first signal is a frequency hopping signal, for example, a frequency-hopping transmitted uplink positioning reference signal SRS. The second signal may be a frequency hopping signal, or may be a non-frequency-hopping signal. For a meaning of "overlapping", refer to the foregoing descriptions.

A time domain position of at least one of the plurality of resources of the first signal is not later than a time domain position of the resource of the second signal. In other words, the time domain position of at least one of the plurality of resources of the first signal is earlier than the time domain position of the resource of the second signal, or the time domain position of at least one of the plurality of resources of the first signal is the same as the time domain position of the resource of the second signal.

In an example, the first signal is a periodic signal, and the second signal is an aperiodic signal or a semi-persistent signal.

In another example, the first signal is a semi-persistent signal, and the second signal is an aperiodic signal.

S1202: In a first time period, the terminal skips sending the first signal, and sends only the second signal.

After the terminal receives the resource configuration and/or scheduling information of the first signal and the configuration or scheduling information of the second signal, in the first time period, the terminal does not send the first signal, and sends only the second signal.

In the foregoing first example, the first signal is the periodic signal, and the second signal is the aperiodic signal or the semi-persistent signal. In other words, the access network device configures a periodic signal to be sent in the first time period, and configures an aperiodic signal resource or a semi-persistent signal resource to be sent in the first time period; or an aperiodic signal resource or a semi-persistent signal resource overlaps a periodic signal resource in the first time period. Because a priority of the aperiodic signal or the semi-persistent signal is higher than that of the periodic signal, in the first time period, the terminal does not send the first signal (discards the first signal), and sends only the second signal. In this way, it is ensured that a signal with a high priority is sent in time. For example, if the aperiodic signal or the semi-persistent signal is an uplink positioning reference signal SRS, where the SRS may be a frequency-hopping SRS or a non-frequency-hopping SRS, an emergency positioning requirement is met.

In the foregoing second example, the first signal is the semi-persistent signal, and the second signal is the aperiodic signal. In other words, the access network device configures a semi-persistent signal to be sent in the first time period, and configures an aperiodic signal resource to be sent in the first time period; or a semi-persistent signal resource overlaps a periodic signal resource in the first time period. Because a priority of the aperiodic signal is higher than that of the semi-persistent signal, in the first time period, the terminal does not send the first signal (discards the first signal), and sends only the second signal. In this way, it is ensured that a signal with a high priority is sent in time. For example, if the aperiodic signal is an uplink positioning reference signal SRS, where the SRS may be a frequency-hopping SRS or a non-frequency-hopping SRS, an emergency positioning requirement is met.

The first time period may be predefined in a protocol, or may be pre-negotiated by the terminal and the access network device, or may be configured by the access network device. In this case, the method may further include the following step: The access network device sends configuration information of the first time period to the terminal. Correspondingly, the terminal receives the configuration information of the first time period. The configuration information of the first time period includes at least one of the following: a start system frame number, a start slot, and a start symbol of the first time period, a periodicity of the first time period, or duration of the first time period. For example, the first time period may be configured periodically. The configured first time period is shown in FIG. 8.

A start position of the first time period is a start position of an earliest second signal in the second signal, and an end position of the second time period is an end position of a latest second signal in the second signal.

In the foregoing embodiments, no configuration, no sending, or no scheduling may be applied to an overlapping symbol. The first time period may be a time period corresponding to the overlapping symbol.

According to the communication method provided in this embodiment of this application, the terminal clearly defines an uplink sending behavior, thereby reducing constraints on configuration or scheduling on a network side, and clearly defines a behavior of the terminal performed when some configurations occur, so that the network side and the terminal have a consistent understanding of the behavior of the terminal.

It may be understood that in this application, an example in which an access network device and a terminal serve as execution bodies of an interaction example is used for description. However, the execution body of the interaction example is not limited in this application. For example, the access network device in the method provided in this application may alternatively be a chip, a chip system, or a processor used in the access network device, or may be a logical node, a logical module, or software that can implement a whole or a part of the access network device. The terminal in the method provided in this application may alternatively be a chip, a chip system, or a processor used in the terminal, or may be a logical node, a logical module, or software that can implement all or some functions of the terminal.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives, via another entity, the information sent by the entity A. The entity A and the entity B herein each may be a RAN node or a terminal, or may be a module in the RAN node or the terminal. Information sending and receiving may be information exchange between a RAN node and a terminal, for example, information exchange between a base station and the terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, in the foregoing embodiments, the method and/or steps implemented by the access network device may alternatively be implemented by a component (for example, a chip or a circuit) used in the access network device, and the method and/or steps implemented by the terminal may alternatively be implemented by a component (for example, a chip or a circuit) used in the terminal.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the access network device in the foregoing method embodiments, or a component that can be used in the access network device. Alternatively, the communication apparatus may be the terminal in the foregoing method embodiments, or a component that can be used in the terminal. It may be understood that, to implement the foregoing functions, the communication apparatus includes a corresponding hardware structure and/or software module for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules according to the foregoing method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, division into the modules is an example, is merely logical function division, and may be other division in actual implementation.

Based on a same concept as the foregoing communication method, this application further provides the following communication apparatuses.

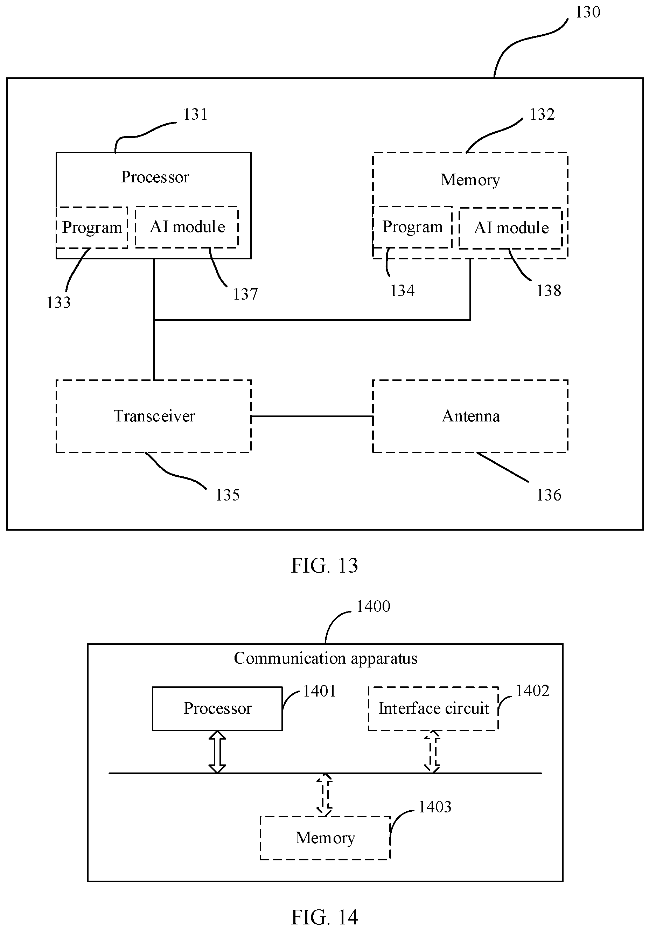

FIG. 13 is a diagram of a structure of a possible communication apparatus. It may be understood that the communication apparatus 130 includes means (means) in necessary forms, such as modules, units, elements, circuits, or interfaces, which are appropriately disposed together to perform the solutions. The communication apparatus 130 may be the RAN node or the terminal in FIG. 1, or may be a component (for example, a chip) in these devices, to implement the method described in the foregoing method embodiments. The communication apparatus 130 includes one or more processors 131 (one processor is used as an example in the figure). The processor 131 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the RAN node, the terminal, or the chip), execute a software program, and process data of the software program.

Optionally, in a design, the processor 131 may include a program 133 (which may also be sometimes referred to as code or instructions). The program 133 may be run on the processor 131, to cause the communication apparatus 130 to perform the method described in the foregoing embodiments. In another possible design, the communication apparatus 130 includes a circuit (not shown in FIG. 13), and the circuit is configured to implement a function of the access network device or the terminal in the foregoing embodiments.

Optionally, the communication apparatus 130 may include one or more memories 132 (one memory is used as an example in the figure), and a program 134 (which may also be sometimes referred to as code or instructions) is stored on the memory 132. The program 134 may be run on the processor 131, to cause the communication apparatus 130 to perform the method described in the foregoing method embodiments.

Optionally, the processor 131 and/or the memory 132 may include artificial intelligence (artificial intelligence, AI) modules 137 and 138. The AI module is configured to implement an AI-related function. The AI module may be implemented by using software, hardware, or a combination of software and hardware. For example, the AI module may include a radio access network intelligent controller (RAN intelligent controller, RIC) module. For example, the AI module may be a near-real-time RIC or a non-real-time RIC.

Optionally, the processor 131 and/or the memory 132 may further store data. The processor and the memory may be separately disposed, or may be integrated together.

Optionally, the communication apparatus 130 may further include a transceiver 135 and/or an antenna 136. The processor 131 may also be sometimes referred to as a processing unit, and controls the communication apparatus (for example, the RAN node or the terminal). The transceiver 135 may also be sometimes referred to as a transceiver unit, a transceiver machine, a transceiver circuit, a transceiver, or the like, and is configured to implement a transceiver function of the communication apparatus through the antenna 136.

FIG. 14 is a diagram of a structure of another communication apparatus according to an embodiment of this application. The communication apparatus 1400 includes a processor 1401. Optionally, the communication apparatus 1400 may further include an interface circuit 1402 (represented by dashed lines in the figure), and the processor 1401 and the interface circuit 1402 are coupled to each other. It may be understood that the interface circuit 1402 may be a transceiver or an input/output interface. Optionally, the communication apparatus 1400 may further include a memory 1403 (represented by dashed lines in the figure). The memory 1403 is configured to: store instructions executed by the processor 1401, or store input data needed by the processor 1401 to run the instructions, or store data generated by running the instructions by the processor 1401. The processor 1401 is configured to implement a function of the processor 131 in the embodiment shown in FIG. 13, and the interface circuit 1402 is configured to implement a function of the transceiver 135 in the embodiment shown in FIG. 13.

When the communication apparatus is a chip used in an access network device, the chip implements a function of the access network device in the foregoing method embodiments. The chip receives information from another module (for example, a radio frequency module or an antenna) in the access network device, and the information is sent by a terminal to the access network device. Alternatively, the chip sends information to another module (for example, a radio frequency module or an antenna) in the access network device, and the information is sent by the access network device to a terminal.

When the communication apparatus is a chip used in a terminal, the chip implements a function of the terminal in the foregoing method embodiments. The chip receives information from another module (for example, a radio frequency module or an antenna) in the terminal, and the information is sent by an access network device to the terminal. Alternatively, the chip sends information to another module (for example, a radio frequency module or an antenna) in the terminal, and the information is sent by the terminal to an access network device.

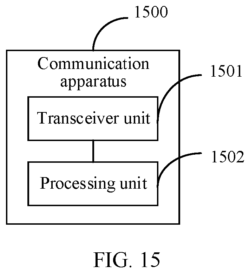

FIG. 15 is a diagram of a structure of still another communication apparatus according to an embodiment of this application. The communication apparatus 1500 includes a transceiver unit 1501 and a processing unit 1502.

When the communication apparatus is configured to implement functions of a terminal, the transceiver unit 1501 is configured to perform functions of the terminal in steps S701 and S702 shown in FIG. 7, or the transceiver unit 1501 is configured to perform functions of the terminal in steps S1101 and S1102 shown in FIG. 11, or the transceiver unit 1501 is configured to perform functions of the terminal in steps S1201 and S1202 shown in FIG. 12.

When the communication apparatus is configured to implement functions of an access network device, the transceiver unit 1501 is configured to perform functions of the access network device in steps S701 and S702 shown in FIG. 7, or the transceiver unit 1501 is configured to perform functions of the access network device in steps S1101 and S1102 shown in FIG. 11, or the transceiver unit 1501 is configured to perform functions of the access network device in steps S1201 and S1202 shown in FIG. 12.

For specific implementations of the transceiver unit 1501 and the processing unit 1502, refer to the descriptions in the foregoing method embodiments.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

In this application, division into the modules is an example, is merely logical function division, and may be other division in actual implementation. In addition, functional modules in the examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

When the communication apparatus is a module used in an access network device, the module in the access network device implements a function of the access network device in the foregoing method embodiments. The module in the access network device receives information from another module (for example, a radio frequency module or an antenna) in the access network device, and the information is sent by a terminal to the access network device. Alternatively, the module in the access network device sends information to another module (for example, a radio frequency module or an antenna) in the access network device, and the information is sent by the access network device to a terminal. The module in the access network device herein may be a baseband chip of the access network device, or may be a CU, a DU, or another module, or may be an apparatus in an O-RAN architecture, for example, an apparatus like an open CU or an open DU.

It should be noted that one or more of the foregoing units or units may be implemented by software, hardware, or a combination of software and hardware. When any one of the foregoing units or units is implemented by software, the software exists in a form of computer program instructions, and is stored in a memory. A processor may be configured to: execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, or a discrete hardware component, and can implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a programmable logic device (programmable logic device, PLD), a dedicated digital circuit, a hardware accelerator, or a non-integrated discrete device. The hardware may run necessary software or do not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

At least one piece (item) in this application indicates one or more pieces (items). A plurality of pieces (items) mean two or more pieces (items). The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in this application to describe objects, the objects should not be limited by these terms. These terms are merely used for distinguishing the objects from each other.

The terms "include", "have", and any other variant thereof mentioned above are intended to cover non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that, in this application, the word such as "example" or "for example" is used for representing giving an example, an illustration, or a description. Any method or design scheme described as an "example" or "for example" in this application should not be explained as being preferred or having more advantages than another method or design scheme. To be precise, use of the word such as "example" or "for example" is intended to present a relative concept in a specific manner.

A network element in the communication system may send a signal to another network element or receive a signal from another network element. The signal may include information, signaling, data, or the like. The network element may alternatively be replaced with an entity, a network entity, a device, a terminal, a communication module, a node, a communication node, or the like. In this application, the network element is used as an example for description. For example, the communication system may include at least one terminal and at least one access network device. The access network device may send a downlink signal to the terminal, and/or the terminal may send an uplink signal to the access network device. In addition, it may be understood that, if the communication system includes a plurality of terminals, the plurality of terminals may alternatively send signals to each other. In other words, both a signal sending network element and a signal receiving network element may be terminals.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a good effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the descriptions of embodiments have respective focuses. For a part that is not described in detail in an embodiment, refer to related descriptions of another embodiment.

The components in the apparatuses in embodiments of this application may be combined, divided, and deleted based on an actual need. A person skilled in the art may combine different embodiments and features of the different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A communication method, wherein the method comprises:
sending, by an access network device, resource configuration and/or scheduling information of a first signal to a terminal, wherein the resource configuration and/or scheduling information are/is used to configure and/or schedule a plurality of resources of the first signal, time domain positions of the plurality of resources are not overlapping, and frequency domain positions of the plurality of resources are partially overlapping or entirely non-overlapping; and
receiving, by the access network device, the first signal from the terminal at positions of the plurality of resources in a first time period, wherein
the terminal is not configured and/or not scheduled to send a second signal in the first time period.

2. The method according to claim 1, wherein the method further comprises: sending configuration information of the first time period to the terminal.

3. A communication method, wherein the method comprises:
receiving, by a terminal, resource configuration and/or scheduling information of a first signal from an access network device, wherein the resource configuration and/or scheduling information are/is used to configure and/or schedule a plurality of resources of the first signal, time domain positions of the plurality of resources are not overlapping, and frequency domain positions of the plurality of resources are partially overlapping or entirely non-overlapping; and
sending, by the terminal, the first signal at positions of the plurality of resources in a first time period, wherein
the terminal does not expect the access network device to configure or schedule the terminal to send a second signal in the first time period.

4. The method according to claim 3, wherein the method further comprises: receiving, by the terminal, configuration information of the first time period from the access network device.

5. The method according to claim 2 or 4, wherein the configuration information of the first time period comprises at least one of the following: a start system frame number, a start slot, and a start symbol of the first time period, a periodicity of the first time period, or duration of the first time period.

6. The method according to any one of claims 1 to 5, wherein a start position of the first time period is a start position of an earliest first signal in the first signal, and an end position of the first time period is an end position of a latest first signal in the first signal.

7. The method according to any one of claims 1 to 6, wherein the first signal is a positioning reference signal; and
the second signal is a positioning reference signal or an uplink channel.

8. The method according to claim 7, wherein the first signal and the second signal are positioning reference signals, and the first signal and the second signal are any one of the following: periodic signals, semi-persistent signals, or aperiodic signals.

9. A communication method, wherein the method comprises:
receiving, by a terminal, resource configuration and/or scheduling information of a first signal from an access network device, and receiving configuration or scheduling information of a second signal, wherein the resource configuration and/or scheduling information of the first signal are/is used to configure and/or schedule a plurality of resources of the first signal, time domain positions of the plurality of resources are not overlapping, frequency domain positions of the plurality of resources are partially overlapping or entirely non-overlapping, and a time domain position of at least one of the plurality of resources of the first signal is not later than a time domain position of a resource of the second signal; and
sending, by the terminal, only the first signal in a first time period.

10. The method according to claim 9, wherein the method further comprises:
skipping, by the terminal, sending the second signal in the first time period.

11. The method according to claim 9 or 10, wherein the time domain position of at least one of the plurality of resources of the first signal is not later than the time domain position of the resource of the second signal, the first signal and the second signal are signals of a same type, and the signal type comprises any one of the following: a periodic signal, a semi-persistent signal, or an aperiodic signal.

12. The method according to claim 9 or 10, wherein the first signal is an aperiodic signal, and the second signal is a periodic signal or a semi-persistent signal.

13. A communication method, wherein the method comprises:
receiving, by a terminal, resource configuration and/or scheduling information of a first signal from an access network device, and receiving configuration or scheduling information of a second signal, wherein the resource configuration and/or scheduling information of the first signal are/is used to configure and/or schedule a plurality of resources of the first signal, time domain positions of the plurality of resources are not overlapping, frequency domain positions of the plurality of resources are partially overlapping or entirely non-overlapping, and a time domain position of at least one of the plurality of resources of the first signal is not later than a time domain position of a resource of the second signal; and
in a first time period, skipping, by the terminal, sending the first signal, and sending only the second signal.

14. The method according to claim 13, wherein the first signal is a periodic signal, and the second signal is an aperiodic signal or a semi-persistent signal.

15. The method according to claim 13, wherein the first signal is a semi-persistent signal, and the second signal is an aperiodic signal.

16. The method according to any one of claims 9 to 15, wherein a start position of the first time period is a start position of the second signal in time domain, and an end position of the first time period is an end position of the second signal in time domain.

17. The method according to any one of claims 9 to 16, wherein the method further comprises: receiving, by the terminal, configuration information of the first time period from the access network device.

18. The method according to claim 17, wherein the configuration information of the first time period comprises at least one of the following: a start system frame number, a start slot, and a start symbol of the first time period, a periodicity of the first time period, or duration of the first time period.

19. A communication apparatus, comprising a unit configured to implement the method according to any one of claims 1 to 18.

20. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 18 by using a logic circuit or by executing code instructions.

21. A computer-readable storage medium, wherein the storage medium stores a computer program or instructions, and when the computer program or the instructions are executed by a communication apparatus, the method according to any one of claims 1 to 18 is implemented.

22. A computer program product, wherein the computer program product comprises related program instructions, and when the related program instructions are executed, the method according to any one of claims 1 to 18 is implemented.
